# EUROPEAN PATENT SPECIFICATION

(11) **EP 2 838 299 B1**
(45) Date of publication and mention of the grant of the patent: **03.05.2017**
(21) Application number: 13775599.7
(22) Date of filing: 05.03.2013
(51) Int. Cl.: H04W 76/02

(54) **RADIO BEARER CONFIGURATION METHOD AND DEVICE**
FUNKTRÄGERKONFIGURATIONSVERFAHREN UND -VORRICHTUNG
PROCÉDÉ ET DISPOSITIF DE CONFIGURATION DE SUPPORT RADIO

(30) Priority: 10.04.2012 CN 201210104692
(43) Date of publication of application: 18.02.2015
(73) Proprietor: ZTE Corporation, Shenzhen, Guangdong 518057 (CN)
(72) Inventor: REN, Guangjin, Shenzhen, Guangdong 518057 (CN); LIU, Rui, Shenzhen, Guangdong 518057 (CN); ZHANG, Lihua, Shenzhen, Guangdong 518057 (CN)
(74) Representative: Stöckeler, Ferdinand
(86) International application number: PCT/CN2013/072181
(87) International publication number: WO 2013/152643

(56) References cited:
- EP-A1- 1 965 597
- CN-A- 1 937 828
- CN-A- 1 972 500
- CN-A- 101 115 276
- CN-A- 102 724 759
- US-A1- 2007 041 343
- PANASONIC: "SAE Radio Bearer Establishment procedure", 3GPP DRAFT; R2-061221, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG2, no. Shanghai, China; 20060503, 3 May 2006 (2006-05-03), XP050131167, [retrieved on 2006-05-03]
- 3GPP: "3rd Generation Partnership Project; Technical Specification Group Radio Access Network; Evolved Universal Terrestrial Radio Access (E-UTRA); Radio Resource Control (RRC); Protocol specification (Release 10)", 3GPP DRAFT; 36331-A50, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, 14 March 2012 (2012-03-14), XP050601446, [retrieved on 2012-03-14]

## Description

### Technical Field

The present invention relates to communications field, and in particular to a method and device for configuring radio bearer (RB).

### Background

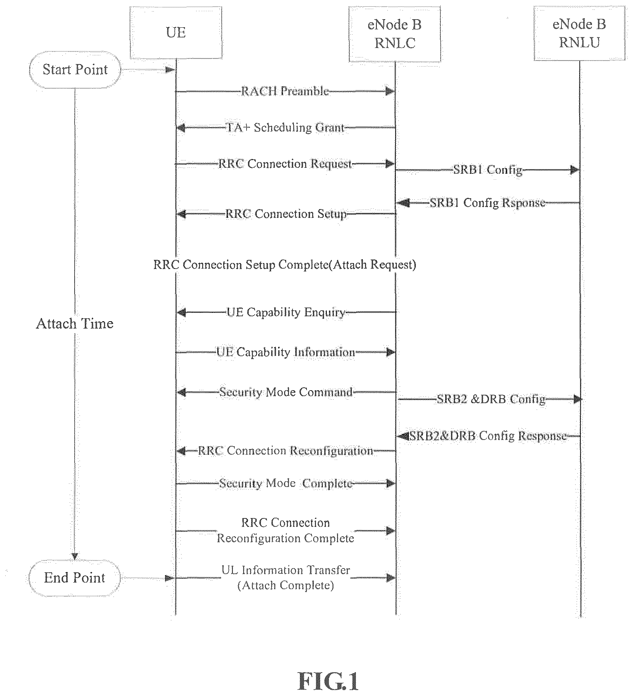

A non-authentication time delay (for example, attach (ATTACH) time delay) is a key performance indicator (KPI) for estimating the service quality of an operator. Fig. 1 is a schematic diagram of a method for calculating an ATTACH time delay of a long term evolution (LTE) according to the relevant art, and as shown in Fig. 1, according to the protocol, the ATTACH time delay is a time difference between a start point when user equipment (UE) side initiates a random access channel preamble (RACH Preamble) and an end point when the UE sends an ATTACH complete (ATTACH Complete). An ATTACH flow as shown in Fig. 1 does not show network storage technology (NST) authentication and does not show an NST security mode, but show an UE capability enquiry.

However, the current long ATTACH time delay directly effects the KPI of an operator, making the degree of user experience relatively low. In view of the problem of long ATTACH time delay in the related art, no effective solution has been presented.

EP1965597 provides respective technical solutions; however, this document remains silent on the situation that the configuration of one or more resource blocks (RBs) at the base station would fail.

### Summary

The invention is defined by the appended claims 1-8, especially the independent claims 1 and 7.

### Brief Description of the Drawings

Drawings, provided for further understanding of the present invention and forming a part of the specification, are used to explain the present invention together with embodiments of the present invention rather than to limit the present invention, wherein:
Fig. 1 is a schematic diagram of a method for calculating an ATTACH time delay of a long term evolution according to the relevant art;
Fig. 2 is a flowchart of a method for configuring radio bearer according to an embodiment of the present invention;
Fig. 3 is a structural block diagram of a device for configuring radio bearer according to an embodiment of the present invention;
Fig. 4 is a preferred structural block diagram of a device for configuring radio bearer according to an embodiment of the present invention;
Fig. 5 is another preferred structural block diagram of a device for configuring radio bearer according to an embodiment of the present invention;
Fig. 6 is a schematic diagram of a normal flow according to the first preferred embodiment of the present invention;
Fig. 7 is a schematic diagram of an abnormal flow according to the first preferred embodiment of the present invention;
Fig. 8 is another schematic diagram of an abnormal flow according to the first preferred embodiment of the present invention;
Fig. 9 is a schematic diagram of a normal flow according to the second preferred embodiment of the present invention;
Fig. 10 is a schematic diagram of an abnormal flow according to the second preferred embodiment of the present invention; and
Fig. 11 is another schematic diagram of an abnormal flow according to the second preferred embodiment of the present invention.

### Detailed Description of Embodiments

The present invention will be described hereinafter in detail with reference to the drawing and in conjunction with the embodiments. It needs to be noted that the embodiments of the present application and the features in the embodiments can be combined with each other if no conflict exists.

It can be seen from the flowchart of Fig. 1, in an ATTACH process, when an evolved NodeB (ENB) setups at least one RB (including SRB1, SRB2 and DRB), it is necessary to synchronously wait the completion of the at least one RB setup before initiating a subsequent signalling flow, that is, the signalling for configuring the at least one RB and an air interface signalling are a serial flow, and the air interface signalling is transmitted to the UE after the RB has been configured. This way has a certain effect on the ATTACH, lowering the degree of user experience.

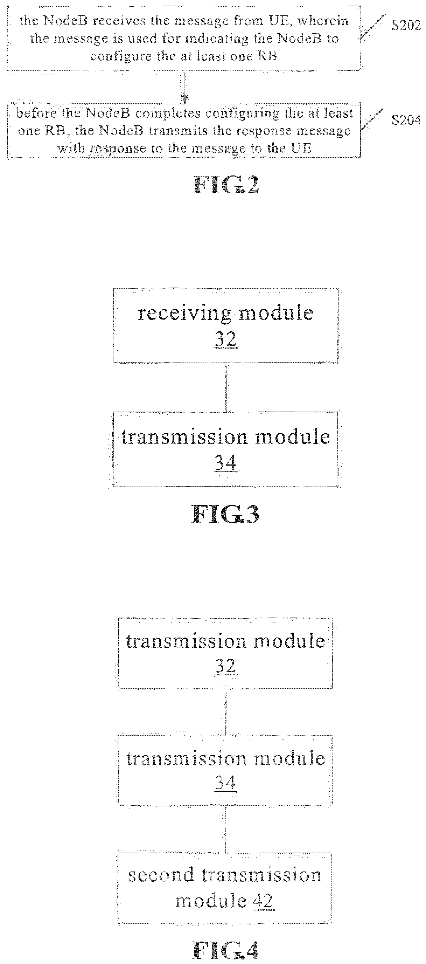

An embodiment of the present invention provides method for configuring radio bearer (RB). Fig. 2 is a flowchart of a method for configuring radio bearer according to an embodiment of the present invention. As shown in Fig. 2, the method comprises the following steps:
step 202, the NodeB receives a message from UE, wherein, the message is used for indicating the NodeB to configure at least one RB; and
step 204, the NodeB transmits a response message in response to the message to the UE before the NodeB completes configuring the at least one RB.

In the above-mentioned steps, the NodeB transmits the response message to the UE before the NodeB completes configuring the at least one RB, so that the UE is able to perform a subsequent signalling flow when the NodeB has not completed configuring the at least one RB. In contrast to the present invention, the NodeB transmits the response message to the UE after the NodeB completes configuring the at least one RB in the relevant art. Therefore, the present invention enables the flows, which are the flow that the UE performs the subsequent signalling and the flow that the NodeB configures the RB, to be processed in parallel manner. The embodiments of the present invention solve the problem of long ATTACH time delay in the related art and shorten the ATTACH time delay, thus being able to improve the KPI of the operator.

Preferably, the above-mentioned message transmitted by the UE may be received by the control plane of the NodeB; then the control plane transmits the response message in response to the message to the UE; and the control plane of the NodeB transmits a command to the user plane of the NodeB, wherein the command is used for indicating the user plane to configure the at least one RB. It should be noted that in an LTE system, the process of the NodeB configuring the RB may be performed in the user plane of the NodeB, the process of transmitting the response message to the UE may be performed in the control plane of the NodeB; while in other systems, the above-mentioned process of configuring the RB and the process of communicating with the UE are not necessarily performed in the above-mentioned planes.

Preferably, the at least one RB configured by the NodeB may be an SRB 1, and may be an SRB2 and DRB, or other RBs. For example, when the RB is SRB1, a message which is received by the NodeB and transmitted by the UE is a radio resource control (RRC) connection request message (RrcConnectionRequest), and a response message is an RRC connection setup message (RrcConnectionSetup). For another example, when the RBs are the SRB2 and DRB (SRB2&DRB), a message which is received by the NodeB and transmitted by the UE is a message about UE capability information (UeCapabilityInformation), and a response message is an RRC connection reconfiguration message (RrcConnectionReconfig).

Given that the RB may be not configured successfully by the NodeB, a preferable embodiment is provided. In this embodiment, after step 204, the NodeB may determines whether the at least one RB is configured successfully; and in the case where a determining result is that the at least one RB is not configured successfully, the NodeB may initiate an exception rollback, wherein the exception rollback refer to the case where the NodeB re-receives the message transmitted by the UE. For example, the NodeB may roll back to the step 202. In this way, the reliability of the solution is improved.

There are many ways for the NodeB to determine that the at least one RB is not configured successfully. Two preferable methods are provided in this embodiment. The first method: in the case where a configuration response, which is in response to configuring at least one RB and is received by the control plane of the NodeB from the user plane of the NodeB, indicates fail, it is determined that the determining result is that the at least one RB is not configured successfully. The second method: in the case where the control plane of the NodeB does not receive the configuration response, which is in response to configuring at least one RB and is from the user plane of the NodeB, within a pre-determined time, it is determined that the determining result is that the at least one RB is not configured successfully. By the above-mentioned methods, the flexibility of the exception rollback operation is improved.

Corresponding to the above-mentioned method, the present embodiment further provides a device for configuring RB. The device is provided on a NodeB, and is configured to implement the above-mentioned embodiments and preferable embodiments. With that has been described, no further description is repeated. As used in the following, the term "module" can achieve a combination of predetermined functional software and/or hardware. Although the device described by the following embodiment is preferably achieved by software, achieving by hardware, or a combination of software and hardware can also be possible and be thought of.

Fig. 3 is a structural block diagram of a device for configuring radio bearer according to an embodiment of the present invention; as shown in Fig. 3, the device comprises: a receiving module **32** and a transmission module **34;** and each module is described in detail below. A receiving module **32** is configured to receive a message transmitted by UE, wherein the message is used for indicating the NodeB to configure at least one radio bearer; and a transmission module **34** is connected to the receiving module **32** and is configured to transmit the response message in response to the message to the UE before the NodeB completes configuring the at least one RB.

Through the above-mentioned device, the NodeB transmits the response message to the UE before the NodeB completes configuring the at least one RB, so that the UE is able to perform a subsequent signalling flow when the NodeB has not completed configuring the at least one RB. In contrast to the solution of the present invention, the NodeB transmits the response message to the UE after the NodeB completes configuring the RB in the relevant art. Therefore, the solution of the present invention enables the flows, which are the flow that the UE processes the subsequent signalling and the flow that the NodeB configures the RB, to be processed in parallel manner. The present embodiment solves the problem of long ATTACH time delay in the relevant art and shortens the ATTACH time delay, thus being able to improve the KPI of the operator.

Fig. 4 is a preferred structural block diagram of a device for configuring radio bearer according to an embodiment of the present invention; as shown in Fig. 4, the receiving module **32** may further be configured to receive the message transmitted by the UE through the control plane of the NodeB, wherein the message is used for indicating the NodeB to configure at least one RB; the transmission module **34** may further be configured to transmit the response message in response to the message to the UE through the control plane; and the above-mentioned device further comprises a second transmission module **42,** connected to the transmission module **34,** and configured to transmit a command to the user plane of the NodeB through the control plane, wherein the command is used for indicating the user plane to configure the at least one RB.

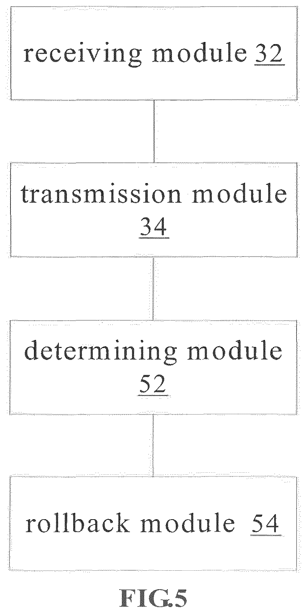

Fig. 5 is another preferred structural block diagram of a device for configuring radio bearer according to an embodiment of the present invention; as shown in Fig. 5, the device further comprises: a determining module **52,** connected to the transmission module **34,** and configured to determine whether the at least one RB is configured successfully; and a rollback module **54,** connected to the determining module **52,** and configured to initiate, in the case where a determining result of the determining module **52** is that the at least one RB is not configured successfully, an exception rollback, wherein the exception rollback refer to the case where the NodeB re-receives the above-mentioned message transmitted by the UE.

It will be described hereinafter in combination with preferred embodiments; and the preferred embodiments below combines the above-mentioned embodiments and preferable embodiments thereof.

In the following preferable embodiments, a method and device for reducing an access time delay are further provided. The access time delay is reduced by turning a serial flow process, which is about configuring the RB and processing the following service signalling, into parallel processes in the LTE system, and thus improving user experience.

In the following preferable embodiments, when an ENB receives a relevant signalling of the UE that it is necessary to configure the RB, the ENB directly initiates a consequent signalling flow without needing to wait for completing configuring the RB, so as to effectively solve the problem of excessively long ATTACH time delay caused by the synchronous wait for completing configuring the RB, thus improving the degree of user experience.

### The first preferred embodiment

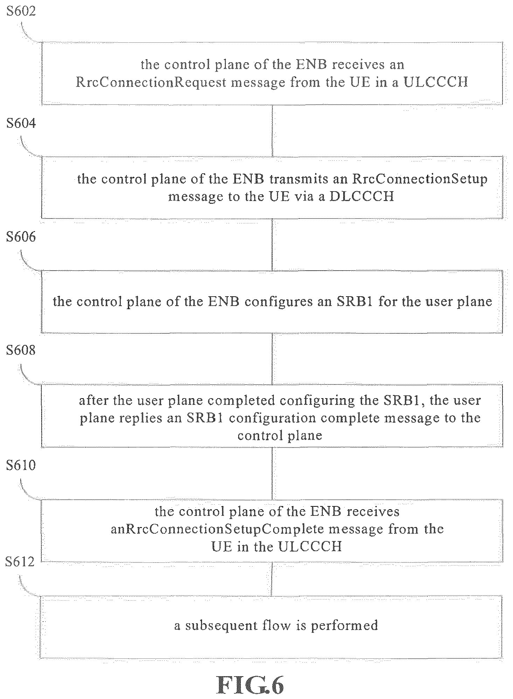

Fig. 6 is a schematic diagram of a normal flow according to the first preferred embodiment of the present invention; and as shown in Fig. 6, the normal flow comprises the following steps:
Step 602, the control plane of the ENB receives an RRC Connection Request (RrcConnectionRequest) message from the UE in an uplink common control channel (ULCCCH).
Step 604, the control plane of the ENB transmits an RRC Connection Setup (RrcConnectionSetup) message to the UE via a downlink common control channel (DLCCCH).
Step 606, the control plane of the ENB configures an SRB1 for the user plane.
Step 608, after the user plane completes configuring the SRB1, the user plane replies an SRB1 configuration completion message to the control plane.
Step 610, the control plane of the ENB receives an RRC Connection Setup Complete (RrcConnectionSetupComplete) message transmitted by the UE in the ULCCCH.
Step 612, a subsequent flow is performed.

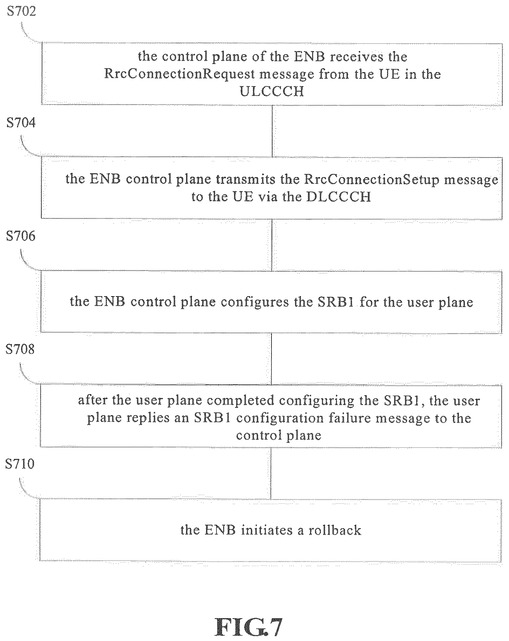

Fig. 7 is a schematic diagram of an abnormal flow according to the first preferred embodiment of the present invention; and as shown in Fig. 7, the abnormal flow comprises the following steps:
step 702, the control plane of the ENB receives the RRC Connection Request (RrcConnectionRequest) message from the UE in the ULCCCH.
Step 704, the control plane of the ENB transmits the RRC Connection Setup (RrcConnectionSetup) message to the UE via the DLCCCH.
Step 706, the control plane of the ENB configures the SRB1 for the user plane.
Step 708, after the user plane completes configuring the SRB1, the user plane replies an SRB1 configuration Failure message to the control plane.
Step 710, the ENB initiates a rollback.

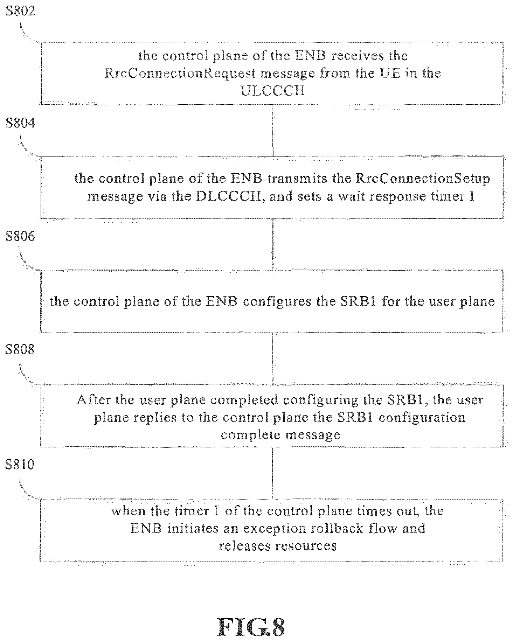

Fig. 8 is another schematic diagram of an abnormal flow according to the first preferred embodiment of the present invention; and as shown in Fig. 8, the abnormal flow comprises the following steps:
step 802, the control plane of the ENB receives the RRC Connection Request (RrcConnectionRequest) message from the UE in the ULCCCH.
Step 804, the control plane of the ENB transmits the RRC Connection Setup (RrcConnectionSetup) message to the UE via the DLCCCH, and sets a wait response timer 1.
Step 806, the control plane of the ENB configures the SRB1 for the user plane.
Step 808, after the user plane completes configuring the SRB1, the user plane replies the SRB1 Configuration Complete message to the control plane.
Step 810, when the timer 1 of the control plane times out, the ENB initiates an exception rollback flow, and releases the resources.

### The second preferred embodiment

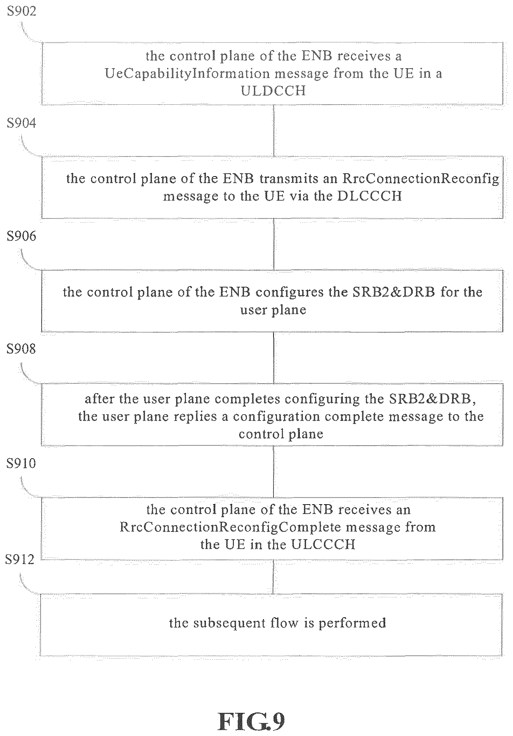

Fig. 9 is a schematic diagram of a normal flow according to the second preferred embodiment of the present invention; and as shown in Fig. 9, the normal flow comprises the following steps:
step 902, after the control plane of the ENB receives the RRC Connection Request (RrcConnectionRequest) message from the UE in the ULCCCH, the control plane of the ENB receives a UE Capability Information (UeCapabilityInformation) message from the UE in a ULDCCH.
Step 904, the control plane of the ENB transmits an RRC Connection Reconfiguration (RrcConnectionReconfig) message to the UE via the DLCCCH.
Step 906, the control plane of the ENB configures SRB2 and DRB for the user plane.
Step 908, after the user plane completes configuring the SRB2 and DRB, the user plane replies a Configuration Completion message to the control plane.
Step 910, the control plane of the ENB receives an RRC Connection Reconfiguration Complete (RrcConnectionReconfigComplete) message from the UE in the ULCCCH.
Step 912, the subsequent flow is performed.

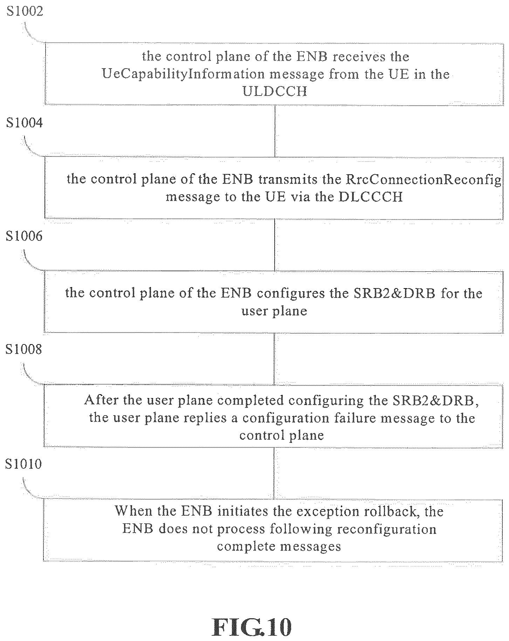

Fig. 10 is a schematic diagram of an abnormal flow according to the second preferred embodiment of the present invention; and as shown in Fig. 10, the abnormal flow comprises the following steps:
step 1002, the control plane of the ENB receives the UE Capability Information (UeCapabilityInformation) message from the UE in the ULDCCH.
Step 1004, the control plane of the ENB transmits the RRC Connection Reconfiguration (RrcConnectionReconfig) message via the DLCCCH to the UE.
Step 1006, the control plane of the ENB configures the SRB2 and DRB for the user plane.
Step 1008, after the user plane completes configuring the SRB2 and DRB, the user plane replies a Configuration Failure message to the control plane.
Step 1010, when the ENB initiates the exception rollback, the ENB does not process the following Reconfiguration Complete messages.

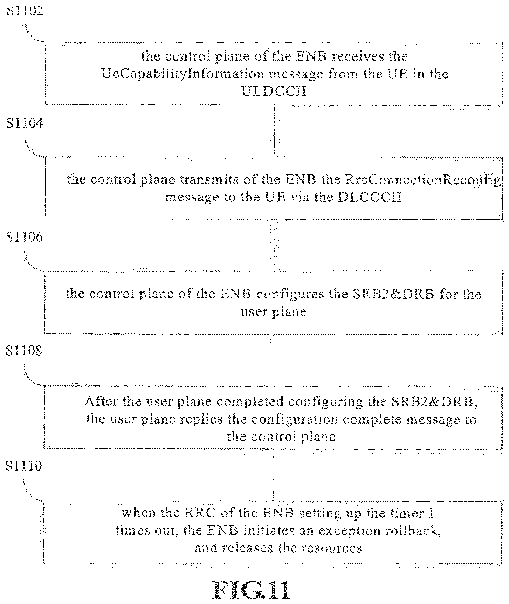

Fig. 11 is a schematic diagram of another abnormal flow according to the second preferred embodiment of the present invention; and as shown in Fig. 11, the abnormal flow comprises the following steps:
step 1102, the control plane of the ENB receives the UE Capability Information (UeCapabilityInformation) message from the UE in the ULDCCH.
Step 1104, the control plane of the ENB transmits the RRC Connection Reconfiguration (RrcConnectionReconfig) message to the UE via the DLCCCH.
Step 1106, the control plane of the ENB configures the SRB2 and DRB for the user plane.
Step 1108, after the user plane completes configuring the SRB2 and DRB, the user plane replies the Configuration Complete message to the control plane.
Step 1110, when the timer 1 for the ENB to setup the RRC times out, the ENB initiates an exception rollback, and releases the resources.

In another embodiment, a kind of software is further provided, and the software is used for executing the technical solutions described in the above-mentioned embodiments and preferable embodiments.

In another embodiment, a storage medium is further provided; the above-mentioned software is stored in the storage medium; and the storage medium includes but is not limited to a CD, a soft disk, a hard disk, and an erasable programmable memory, etc.

In the above-mentioned description, it can be seen that in the present embodiment, the NodeB transmits to the UE the response message before the NodeB completes configuring the RB, so that the UE is able to perform a subsequent signalling flow when the NodeB has not completed configuring the RB. In contrast to the solution the present invention, in the relevant art, the NodeB transmits the response message to the UE after the NodeB completes configuring the RB. Therefore, the solution of the present invention turns the serial flow process, which is a process that the UE processes the subsequent signalling and the NodeB configures the RB, to parallel processes. The present embodiment solves the problem of the long ATTACH time delay in related art and shortens the ATTACH time delay, thus being able to improve the KPI indicator of the operator.

Obviously, those skilled in the art shall understand that the above-mentioned modules and steps of the present invention can be realized by using general purpose calculating device, can be integrated in one calculating device or distributed on a network which consists of a plurality of calculating devices. Alternatively, the modules and the steps of the present invention can be realized by using the executable program code of the calculating device. Consequently, they can be stored in the storing device and executed by the calculating device, or they are made into integrated circuit module respectively, or a plurality of modules or steps thereof are made into one integrated circuit module. In this way, the present invention is not restricted to any particular hardware and software combination.

The descriptions above are only the preferable embodiment of the present invention, which are not used to restrict the present invention. For those skilled in the art, the present invention may have various changes and variations. Any amendments, equivalent substitutions, improvements, etc. within the present invention are all included in the scope of the protection of the present invention, as defined in the claims.

## Claims

1. A method for configuring Radio Bearer, RB, comprising:
receiving, by a NodeB, a message from user equipment, UE, wherein the message is used for indicating the NodeB to configure at least one RB; and
transmitting, by the NodeB, a response message in response to the message to the UE before the NodeB completes configuring the at least one RB;
**characterized by** further comprising; before the NodeB complete configuring the at least one RB, and after the NodeB transmits the response message in response to the message, the method further comprises: determining, by the NodeB, whether the at least one RB is configured successfully; and in the case where a determining result is that the at least one RB is not configured successfully, initiating, by the NodeB, an exception rollback, wherein the exception rollback refer to the case where the NodeB re-receives the message from the UE.

2. The method according to claim 1, **characterized in that**
receiving, by a control plane of the NodeB, the message from the UE, the message being used for indicating the NodeB to configure the at least one RB;
transmitting, by the control plane, to the UE the response message in response to the message; and
transmitting, by the control plane of the NodeB, a command to a user plane of the NodeB, the command being used for indicating the user plane to configure the at least one RB.

3. The method according to claim 1, **characterized in that** the at least one RB configured by the NodeB comprises at least one of the following:
a signalling radio bearer 1, SRB1, a signalling radio bearer 2 SRB2, and a data radio bearer, DRB,

4. The method according to claim 3, **characterized in that** in the case where the at least one RB is the SRB1, the message, which is received by the NodeB and transmitted by the UE, is a radio resource control, RRC, connection request message, and the response message is an RRC connection setup message.

5. The method according to claim 3, **characterized in that** in the case where the RBs are the SRB2 and DRB, the message, which is received by the NodeB and transmitted by the UE, is a UE capability message, and the response message is an RRC connection reconfiguration message.

6. The method according to claim 1, **characterized in that** determining, by the NodeB, whether the at least one RB is configured successfully comprises:
in the case where a configuration response, which is in response to configuring the at least one RB and is received by the control plane of the NodeB from the user plane of the NodeB, indicates fail, determining that the determining result is that the at least one RB is not configured successfully; or
in the case where the control plane of the NodeB does not receive the configuration response, which is in response to configuring the at least one RB, from the user plane of the NodeB within a pre-detennined time, determining that the determining result is the at least one RB is not configured successfully.

7. A device for configuring radio bearer, RB, wherein the device is provided on a NodeB and comprises:
a receiving module configured to receive a message transmitted by user equipment (UE), wherein the message is used for indicating the NodeB to configure at least one RB; and
a transmission module configured to, before the NodeB complete configuring the at least one RB, transmit a response message in response to the message to the UE;
**characterized in that** the device further comprises: a determining module configured to determine whether the at least one RB is configured successfully; and a rollback module, configured to initiate, in the case where a determining result is that the at least one RB is not configured successfully, an exception rollback, wherein the exception rollback refer to the case where the NodeB re-receives the message transmitted by the UE.

8. The device according to claim 7, **characterized in that**
the receiving module is configured to receive the message from the UE through a control plane of the NodeB, the message being used for indicating the NodeB to configure the at least one RB;
the transmission module is configured to transmit the response message in response to the message to the UE through the control plane; and
the device further comprises a second transmission module configured to transmit a command to a user plane of the NodeB through the control plane, the command being used for indicating the user plane to configure the at least one RB.

## Patentansprüche

1. Ein Verfahren zum Konfigurieren eines Funkträgers RB, das folgende Schritte aufweist:
Empfangen, seitens eines KnotenB, einer Nachricht von einer Benutzereinrichtung UE, wobei die Nachricht zum Angeben, dem KnotenB gegenüber, zumindest einen RB zu konfigurieren, verwendet wird; und
Senden, anhand des KnotenB, einer Antwortnachricht ansprechend auf die Nachricht an die UE, bevor der KnotenB das Konfigurieren des zumindest einen RB abschließt;
**dadurch gekennzeichnet, dass** es ferner Folgendes aufweist:
bevor der KnotenB das Konfigurieren des zumindest einen RB abschließt und nachdem der KnotenB die Antwortnachricht ansprechend auf die Nachricht sendet, weist das Verfahren ferner folgende Schritte auf: Bestimmen, seitens des KnotenB, ob der zumindest eine RB erfolgreich konfiguriert ist; und in dem Fall, dass ein Bestimmungsergebnis dahin gehend lautet, dass der zumindest eine RB nicht erfolgreich konfiguriert ist, Initiieren, seitens des KnotenB, einer Ausnahmerücksetzung, wobei sich die Ausnahmerücksetzung auf den Fall bezieht, dass der KnotenB die Nachricht von der UE erneut empfängt.

2. Das Verfahren gemäß Anspruch 1, **dadurch gekennzeichnet, dass**
Empfangen, seitens einer Steuerungsebene des KnotenB, der Nachricht von der UE, wobei die Nachricht zum Angeben, dem KnotenB gegenüber, den zumindest einen RB zu konfigurieren, verwendet wird;
Senden, seitens der Steuerungsebene, der Antwortnachricht an die UE ansprechend auf die Nachricht; und
Senden, seitens der Steuerungsebene des KnotenB, eines Befehls an eine Nutzerebene des KnotenB, wobei der Befehl dazu verwendet wird, der Nutzerebene gegenüber anzugeben, den zumindest einen RB zu konfigurieren.

3. Das Verfahren gemäß Anspruch 1, **dadurch gekennzeichnet, dass** der zumindest eine seitens des KnotenB konfigurierte RB zumindest einen der Folgenden aufweist:
einen Signalisierungsfunkträger SRB1, einen Signalisierungsfunkträger SRB2 und einen Datenfunkträger DRB.

4. Das Verfahren gemäß Anspruch 3, **dadurch gekennzeichnet, dass** in dem Fall, dass der zumindest eine RB der SRB1 ist, die Nachricht, die seitens des KnotenB empfangen und seitens der UE gesendet wird, eine Funkressourcensteuerungs-Verbindungsanfragenachricht (RRC-Verbindungsanfragenachricht) ist und die Antwortnachricht eine RRC-Verbindungsaufbaunachricht ist.

5. Das Verfahren gemäß Anspruch 3, **dadurch gekennzeichnet, dass** in dem Fall, dass die RBs der SRB2 und der DRB sind, die Nachricht, die seitens des KnotenB empfangen und seitens der UE gesendet wird, eine UE-Fähigkeitsnachricht ist und die Antwortnachricht eine RRC-Verbindungsrekonfigurationsnachricht ist.

6. Das Verfahren gemäß Anspruch 1, **dadurch gekennzeichnet, dass** das Bestimmen, seitens des KnotenB, ob der zumindest eine RB erfolgreich konfiguriert ist, Folgendes aufweist:
falls eine Konfigurationsantwort, die ansprechend auf das Konfigurieren des zumindest einen RB erfolgt und seitens der Steuerungsebene des KnotenB von der Nutzerebene des KnotenB empfangen wird, einen Fehlschlag angibt, Bestimmen, dass das Bestimmungsergebnis dahin gehend lautet, dass der zumindest eine RB nicht erfolgreich konfiguriert ist; oder
falls die Steuerungsebene des KnotenB die Konfigurationsantwort, die ansprechend auf das Konfigurieren des zumindest einen RB erfolgt, von der Nutzerebene des KnotenB nicht innerhalb eines vorbestimmten Zeitraums empfängt, Bestimmen, dass das Bestimmungsergebnis dahin gehend lautet, dass der zumindest eine RB nicht erfolgreich konfiguriert ist.

7. Eine Vorrichtung zum Konfigurieren eines Funkträgers RB, wobei die Vorrichtung an einem KnotenB vorgesehen ist und folgende Merkmale aufweist:
ein Empfangsmodul, das dazu konfiguriert ist, eine seitens einer Nutzereinrichtung (UE) gesendete Nachricht zu empfangen, wobei die Nachricht dazu verwendet wird, dem KnotenB gegenüber anzugeben, zumindest einen RB zu konfigurieren; und
ein Sendemodul, das dazu konfiguriert ist, bevor der KnotenB das Konfigurieren des zumindest einen RB abschließt, ansprechend an die Nachricht an die UE eine Antwortnachricht zu senden;
**dadurch gekennzeichnet, dass** die Vorrichtung ferner Folgendes aufweist: ein Bestimmungsmodul, das dazu konfiguriert ist, zu bestimmen, ob der zumindest eine RB erfolgreich konfiguriert ist; und ein Rücksetzungsmodul, das dazu konfiguriert ist, in dem Fall, dass ein Bestimmungsergebnis dahin gehend lautet, dass der zumindest eine RB nicht erfolgreich konfiguriert ist, eine Ausnahmerücksetzung einzuleiten, wobei sich die Ausnahmerücksetzung auf den Fall bezieht, dass der KnotenB die seitens der UE gesendete Nachricht erneut empfängt.

8. Die Vorrichtung gemäß Anspruch 7, **dadurch gekennzeichnet, dass**
das Empfangsmodul dazu konfiguriert ist, die Nachricht von der UE durch eine Steuerungsebene des KnotenB zu empfangen, wobei die Nachricht dazu verwendet wird, dem KnotenB gegenüber anzugeben, den zumindest einen RB zu konfigurieren;
das Sendemodul dazu konfiguriert ist, ansprechend auf die Nachricht an die UE durch die Steuerungsebene die Antwortnachricht zu senden; und
die Vorrichtung ferner ein zweites Sendemodul aufweist, das dazu konfiguriert ist, durch die Steuerungsebene einen Befehl an eine Nutzerebene des KnotenB zu senden, wobei der Befehl dazu verwendet wird, der Benutzerebene gegenüber anzugeben, den zumindest einen RB zu konfigurieren.

## Revendications

1. Procédé de configuration d'un support radio, RB, comprenant le fait de:
recevoir, par un NoeudB, un message d'un matériel d'utilisateur, UE, dans lequel
le message est utilisé pour indiquer au NoeudB de configurer au moins un RB; et
transmettre, par le NoeudB, un message de réponse en réponse au message à l'UE avant que le NoeudB ne termine la configuration de l'au moins un RB;
**caractérisé par le fait qu'**il comprend par ailleurs le fait de:
avant que le NoeudB ne termine la configuration de l'au moins un RB et après que le NoeudB transmet le message de réponse en réponse au message, le procédé comprend par ailleurs le fait de: déterminer, par le NoeudB, si l'au moins un RB est configuré fructueusement; et au cas où un résultat de détermination est que l'au moins un RB n'est pas configuré fructueusement, initier, par le NoeudB, un recul d'exception, où le recul d'exception se réfère au cas où le NoeudB reçoit à nouveau le message de l'UE.

2. Procédé selon la revendication 1, **caractérisé par** le fait de
recevoir, par un plan de commande du NoeudB, le message de l'UE, le message étant utilisé pour indiquer au NoeudB de configurer l'au moins un RB;
transmettre, par le plan de commande, à l'UE le message de réponse en réponse au message; et
transmettre, par le plan de commande du NoeudB, une commande à un plan d'utilisateur du NoeudB, la commande étant utilisée pour indiquer au plan d'utilisateur de configurer l'au moins un RB.

3. Procédé selon la revendication 1, **caractérisé par le fait que** l'au moins un RB configuré par le NoeudB comprend au moins l'un de ce qui suit:
un support radio de signalisation 1, SRB1,
un support radio de signalisation 2, SRB2, et
un support radio de données, DRB.

4. Procédé selon la revendication 3, **caractérisé par le fait que**, au cas où l'au moins un RB est le SRB1, le message qui est reçu par le NoeudB et transmis par l'UE est un message de demande de connexion de commande de ressource radio, RRC, et le message de réponse est un message de configuration de connexion de RRC.

5. Procédé selon la revendication 3, **caractérisé par le fait que**, au cas où les RB sont le SRB2 et le DRB, le message qui est reçu par le NoeudB et transmis par l'UE est un message de capacité d'UE et le message de réponse est un message de reconfiguration de connexion de RRC.

6. Procédé selon la revendication 1, **caractérisé par le fait que** la détermination, par le NoeudB, de si l'au moins un RB est configuré fructueusement comprend le fait de:
au cas où une réponse de configuration, qui est en réponse à la configuration de l'au moins un RB et est reçue par le plan de commande du NoeudB du plan d'utilisateur du NoeudB, indique une défaillance, déterminer que le résultat de détermination est que l'au moins un RB n'est pas configuré fructueusement; ou
au cas où le plan de commande du NoeudB ne reçoit pas la réponse de configuration, qui est en réponse à la configuration de l'au moins un RB, du plan d'utilisateur du NoeudB dans un laps de temps prédéterminé, déterminer que le résultat de détermination est que l'au moins un RB n'est pas configuré fructueusement.

7. Dispositif de configuration d'un support radio, RB, dans lequel le dispositif est prévu sur un NoeudB et comprend:
un module de réception configuré pour recevoir un message transmis par un matériel d'utilisateur (UE), où le message est utilisé pour indiquer au NoeudB de configurer au moins un RB; et
un module de transmission configuré pour, avant que le NoeudB ne termine de configurer l'au moins un RB, transmettre un message de réponse en réponse au message à l'UE;
**caractérisé par le fait que**
le dispositif comprend par ailleurs: un module de détermination configuré pour déterminer si l'au moins un RB est configuré fructueusement; et un module de recul configuré pour initier, au cas où un résultat de détermination est que l'au moins un RB n'est pas configuré fructueusement, un recul d'exception, où le recul d'exception se réfère au cas où le NoeudB reçoit à nouveau le message transmis par l'UE.

8. Dispositif selon la revendication 7, **caractérisé par le fait que**
le module de réception est configuré pour recevoir le message de l'UE par l'intermédiaire d'un plan de commande du NoeudB, le message étant utilisé pour indiquer au NoeudB de configurer l'au moins un RB;
le module d'émission est configuré pour transmettre le message de réponse en réponse au message à l'UE par l'intermédiaire du plan de commande; et
le dispositif comprend par ailleurs un deuxième module de transmission configuré pour transmettre une commande à un plan d'utilisateur du NoeudB par l'intermédiaire du plan de commande, la commande étant utilisée pour indiquer au plan d'utilisateur de configurer l'au moins un RB.
